# EUROPEAN PATENT APPLICATION

(11) **EP 3 480 044 A1**
(43) Date of publication of application: **08.05.2019**
(21) Application number: 17818953.6
(22) Date of filing: 11.05.2017
(51) Int. Cl.: B60K 6/36

(54) **POWER DRIVE SYSTEM AND VEHICLE**

(30) Priority: 29.06.2016 CN 201610510553
(71) Applicant: BYD Company Limited, Shenzhen, Guangdong 518118 (CN)
(72) Inventor: LIU, Jing, Shenzhen Guangdong 518118 (CN); HUA, Yu, Shenzhen Guangdong 518118 (CN); CHAI, Lingdao, Shenzhen Guangdong 518118 (CN)
(74) Representative: Hoffmann Eitle
(86) International application number: PCT/CN2017/084021
(87) International publication number: WO 2018/000956

(57) **Abstract**

The present disclosure provides a power drive system and a vehicle. The power drive system includes an engine; a plurality of input shafts, the engine being arranged to selectively engage with at least one of the plurality of input shafts, and a plurality of gear driving gears being arranged on each of the input shafts; a plurality of output shafts, a plurality of gear driven gears being arranged on each of the output shafts, the plurality of gear driven gears being correspondingly meshed with the plurality of gear driving gears, a reverse gear output gear being idly mounted on one of the plurality of output shafts and a reverse gear synchronizer for engaging with the reverse gear output gear being further arranged on the output shaft, a gear portion being arranged at one side of one of the plurality of gear driven gears to form a dual gear, and the reverse gear output gear being meshed with the gear portion; a motor power shaft, a motor-power-shaft first gear and a motor-power-shaft second gear being idly mounted on the motor power shaft, where the motor-power-shaft second gear is arranged to be linked with one of the plurality of gear driving gears; and a first motor generator, the first motor generator being arranged to be linked with the motor power shaft.

## Description

### FIELD

The present disclosure relates to the technical field of automobiles, and more particularly to a power drive system and a vehicle.

### BACKGROUND

With the continuous consumption of energy, the development and utilization of new energy vehicles have gradually become a trend. A hybrid vehicle, as one of the new energy vehicles, is driven by an engine and/or a motor and has a plurality of modes to improve transmission efficiency and fuel economy.

However, in the related art known to the inventors, the transmission in the hybrid vehicle generally has a complicated structure, few transmission modes, and a low transmission efficiency. In addition, the transmission in the conventional hybrid vehicle mostly has five or six gears, and the transmission efficiency is not high.

### SUMMARY

The present disclosure aims at resolving one of the above technical problems in the prior art to some extent. Therefore, one object of the present disclosure is to provide a power drive system. The power drive system is rich in transmission modes and has a plurality of (e.g., seven) forward gears that can better satisfy the needs of the vehicle for power and torque while running.

Another object of the present disclosure is to provide a vehicle including the above-mentioned power drive system.

The power drive system according to the embodiments of the present disclosure includes an engine; a plurality of input shafts, the engine being arranged to selectively engage with at least one of the plurality of input shafts, and a plurality of gear driving gears being arranged on each of the input shafts; a plurality of output shafts, a plurality of gear driven gears being arranged on each of the output shafts, the plurality of gear driven gears being correspondingly meshed with the plurality of gear driving gears, and a reverse gear output gear being idly mounted on one of the plurality of output shafts and a reverse gear synchronizer for engaging with the reverse gear output gear being further arranged on the output shaft, where a gear portion is arranged at one side of one of the plurality of gear driven gears to form a dual gear, and the reverse gear output gear is meshed with the gear portion; a motor power shaft, a motor-power-shaft first gear and a motor-power-shaft second gear being idly mounted on the motor power shaft, and a motor power shaft synchronizer positioned between the motor-power-shaft first gear and the motor-power-shaft second gear being further arranged on the motor power shaft, where the motor-power-shaft second gear is arranged to be linked with one of the plurality of gear driving gears; and a first motor generator, the first motor generator being arranged to be linked with the motor power shaft.

The power drive system according to the embodiments of the present disclosure can realize the charging function when the vehicle is running and parked, and the charging modes are enriched, so that the problems such as a single charging mode and low charging efficiency of the existing power transmission system are solved at least to some extent. In short, the power drive system according to the embodiments of the present disclosure is capable of achieving two charging modes, namely, a running charging mode and a parking charging mode. Moreover, the power drive system according to the embodiments of the present disclosure has a plurality of (e.g., seven) forward gears, which can transmit power more smoothly, and realize high transmission efficiency, and a plurality of (e.g., seven) different transmission speed ratios can better meet the demands of the vehicle for power and torque under different road conditions.

Further, the power drive system according to the embodiments of the present disclosure may further have the following additional technical features:

According to some embodiments of the present disclosure, the plurality of input shafts includes a first input shaft and a second input shaft, and the second input shaft is sleeved over the first input shaft; the plurality of output shafts includes a first output shaft and a second output shaft; a first-gear driving gear, a third- and fifth-gear driving gear and a seventh-gear driving gear are fixedly arranged on the first input shaft, and a second-gear driving gear and a fourth- and sixth-gear driving gear are fixedly arranged on the second input shaft; a first-gear driven gear, a second-gear driven gear, a third-gear driven gear and a fourth-gear driven gear are idly mounted on the first output shaft, and a fifth-gear driven gear, a sixth-gear driven gear and a seventh-gear driven gear are idly mounted on the second output shaft; a first- and third-gear synchronizer is arranged between the first-gear driven gear and the third-gear driven gear, a second-fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged at one side of the sixth-gear driven gear.

According to some embodiments of the present disclosure, the reverse gear output gear is idly mounted on the second output shaft and adjacent to the sixth-gear driven gear, and the reverse gear output gear and the sixth-gear driven gear share the sixth-gear synchronizer so that the sixth-gear synchronizer constitutes a reverse gear synchronizer.

According to some embodiments of the present disclosure, a first-output-shaft output gear is fixedly arranged on the first output shaft, a second-output-shaft output gear is fixedly arranged on the second output shaft, and the first-output-shaft output gear, the second-output-shaft output gear and the motor-power-shaft first gear are all meshed with a final drive driven gear of the vehicle.

According to some embodiments of the present disclosure, the power drive system further includes a dual clutch, the dual clutch has an input end, a first output end, and a second output end, the engine is connected with the input end, the first output end is connected with the first input shaft, and the second output end is connected with the second input shaft.

According to some embodiments of the present disclosure, the gear portion is arranged at one side of the second-gear driven gear to constitute the dual gear.

According to some embodiments of the present disclosure, the reverse gear output gear and one gear driven gear, adjacent to the reverse gear output gear, in the plurality of gear driven gears share a gear synchronizer, and the shared gear synchronizer constitutes a reverse gear synchronizer.

According to some embodiments of the present disclosure, the motor-power-shaft second gear is linked with the fourth- and sixth-gear driving gear or the seventh-gear driving gear.

According to some embodiments of the present disclosure, the distance between the second-gear driving gear and the engine, the distance between the fourth- and sixth-gear driving gear and the engine, the distance between the third- and fifth-gear driving gear and the engine, the distance between the first-gear driving gear and the engine, and the distance between the seventh-gear driving gear and the engine increase progressively.

The vehicle according to the embodiments of the present disclosure includes the power drive system in the above embodiments.

### BRIEF DESCRIPTION OF THE DRAWINGS

FIG. 1 is a schematic diagram of a power drive system according to an embodiment of the present disclosure;
FIG. 2 is a schematic diagram of a power drive system according to another embodiment of the present disclosure;
FIG. 3 is a schematic diagram of a power drive system according to yet another embodiment of the present disclosure;
FIG. 4 is a schematic diagram of a power drive system according to still another embodiment of the present disclosure;
FIG. 5 is a schematic diagram of a power drive system according to still another embodiment of the present disclosure;
FIG. 6 is a schematic diagram of a power drive system according to still another embodiment of the present disclosure;
FIG. 7 is a schematic diagram of a power drive system according to still another embodiment of the present disclosure; and
FIG. 8 is a schematic diagram of a power drive system according to still another embodiment of the present disclosure.

### DETAILED DESCRIPTION

The embodiments of the present disclosure are described in detail below. Examples of the embodiments are illustrated in the accompanying drawings. Same or like reference numerals throughout the specification denote same or like components or components having same or like functions. The embodiments described below with reference to the accompanying drawings are exemplary, and are used for explaining rather than limiting the present disclosure.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", and "counterclockwise" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In addition, the terms such as "first" and "second" are used only for the purpose of description, and should not be understood as indicating or implying the relative importance or implicitly specifying the number of the indicated technical features. Therefore, a feature defined by "first" or "second" can explicitly or implicitly include one or more of said features. In the description of the present disclosure, "a plurality of' means at least two, such as two and three, unless otherwise explicitly and specifically defined.

In the present disclosure, unless otherwise explicitly stated or defined, the terms such as "installation", "link", "connection", "fix" are to be understood broadly, for example, the connection may be either fixed connection or detachable connection, or integrated, may be mechanical connection, and may also be electrical connection or mutual communication; may be direct connection, or may also be indirect connection through an intermediate medium, may be internal communication of two elements or an interaction relationship of two elements. Persons of ordinary skill in the art may understand the specific meanings of the foregoing terms in this application according to specific situations.

In the present invention, unless otherwise explicitly specified or defined, a first feature being "above" or "under" a second feature may include that the first and second features are in direct contact and may also include that the first and second features are not in direct contact but are in contact by means of another feature therebetween. In addition, the first feature being "over", "above" or "on the top of' a second feature may include that the first feature is over or above the second feature or merely indicates that the horizontal height of the first feature is higher than that of the second feature. The first feature being "underneath", "below" or "on the bottom of' a second feature may include that the first feature is underneath or below the second feature or merely indicates that the horizontal height of the first feature is lower than that of the second feature.

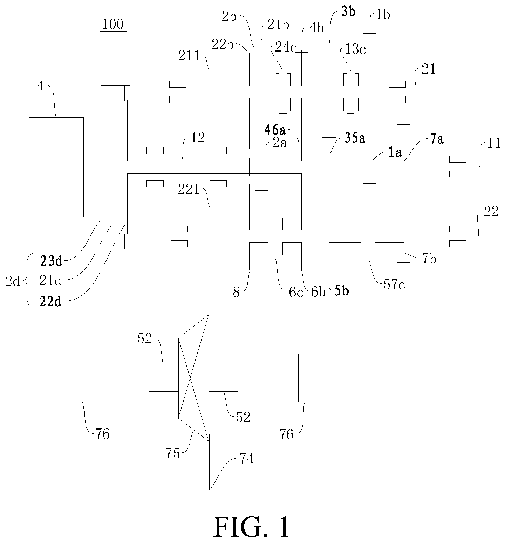

A power drive system 100 according to the embodiments of the present disclosure will be described in detail below with reference to FIG. 1 to FIG. 8. The power drive system is suitable for use in a vehicle such as a hybrid vehicle, and used as a power system of the vehicle to provide sufficient power and electric energy for the normal running of the vehicle.

The power drive system 100 according to the embodiments of the present disclosure mainly includes two main parts, one of which may be a power source, the power source may include an engine 4, a motor generator and the like, and the other may be a transmission (including a plurality of input shafts, a plurality of output shafts, a gear-position gear pair and the like), and the transmission is used to realize the speed changing function of power output from the power source to meet the running requirements or charging requirements of the vehicle and the like.

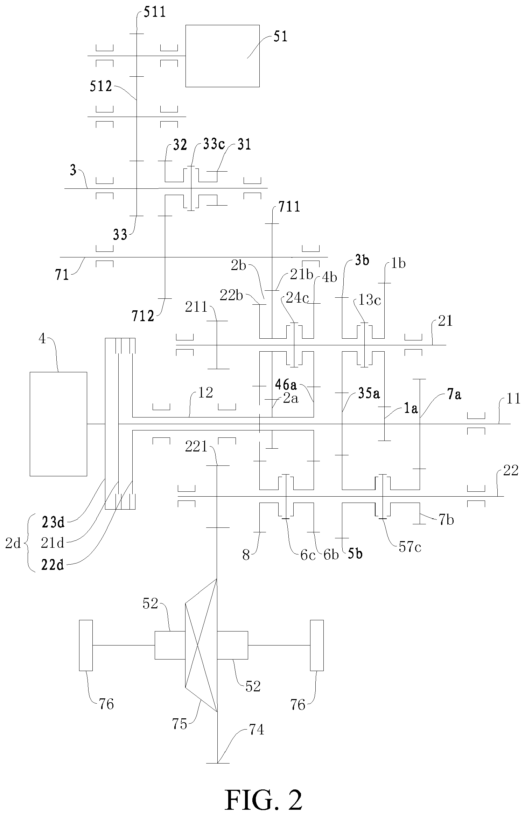

For example, in some embodiments, as shown in FIG. 2 to FIG. 8, the power drive system 100 may include an engine 4, a first motor generator 51, and a transmission, but is not limited thereto.

As shown in FIG. 2 to FIG. 8, in some embodiments, the transmission mainly includes a plurality of input shafts (e.g., a first input shaft 11 and a second input shaft 12), a plurality of output shafts (e.g., a first output shaft 21 and a second output shaft 22) and a motor power shaft 3 as well as an associated gear on each shaft and shifting elements (e.g., synchronizers).

The engine 4 is arranged to selectively engage with at least one of the plurality of input shafts when power is transmitted between the engine 4 and the input shafts. In other words, for example, when the engine 4 transmits power to the input shafts, the engine 4 can selectively engage with one of the plurality of input shafts to transmit power, or the engine 4 can also selectively engage with two or more of the plurality of input shafts at the same time to transmit power.

For example, in examples of FIG. 1 to FIG. 8, the plurality of input shafts may include a first input shaft 11 and a second input shaft 12, and the engine 4 can selectively engage with one of the first input shaft 11 and the second input shaft 12 to transmit power. Alternatively, the engine 4 can also engage with the first input shaft 11 and the second input shaft 12 simultaneously to transmit power. Of course, it should be understood that the engine 4 can also be disconnected from the first input shaft 11 and the second input shaft 12 at the same time.

For those of ordinary skill in the art, the engagement state of the engine 4 and the input shafts is related to the specific operating conditions of the power drive system 100, which will be described in more detail below in combination with specific embodiments. The descriptions thereof are omitted herein.

The power can be transmitted between the input shaft and the output shaft by a gear-position gear pair. For example, a plurality of gear driving gears are arranged on each input shaft, a plurality of gear driven gears are arranged on each output shaft, and the plurality of gear driven gears are correspondingly meshed with the plurality of gear driving gears to constitute a plurality of pairs of gear pairs having different speed ratios.

In some embodiments of the present disclosure, the power drive system 100 may have seven forward-gear gear pairs, namely, a first-gear gear pair, a second-gear gear pair, a third-gear gear pair, a fourth-gear gear pair, a fifth-gear gear pair, a sixth-gear gear and a seventh-gear gear pair.

As shown in FIG. 1 to FIG. 8, a reverse gear output gear 8 is idly mounted on one of the output shafts, and a reverse gear synchronizer (for example, a sixth-gear synchronizer 6c) for engaging the reverse gear output gear 8 is further arranged on the output shaft, in other words, the reverse gear synchronizer synchronizes the reverse gear output gear 8 with the corresponding output shaft so that the output shaft is linked with the reverse gear output gear 8, and then the reverse gear power can be output from the output shaft.

In some embodiments, as shown in FIG. 1 to FIG. 8, the number of the reverse gear output gears 8 is one, the reverse gear output gear 8 may be idly mounted on the second output shaft 22, and the reverse gear synchronizer may be the sixth-gear synchronizer 6c (i.e., a gear synchronizer).

The reverse gear output gear 8 is linked with one gear driven gear and rotates in the opposite direction, thereby omitting a reverse gear shaft, so that power drive system 100 is more compact in structure, the radial dimension is smaller, and the arrangement is facilitated. In some embodiments of the present disclosure, a gear portion is arranged at one side of the gear driven gear to form a dual gear, and the reverse gear output gear is meshed with the gear portion. For example, in the examples of FIG. 1 to FIG. 8, the second-gear driven gear 2b is a dual gear, and has a gear portion 21b and a gear portion 22b, the gear portion 21b serves as a conventional driven gear, that is, the gear portion 21b is meshed with the second-gear driving gear 2a, and the gear portion 22b is connected to one side of the gear portion 21b and is meshed with the reverse gear output gear 8. By setting the gear driven gear as a dual gear and implementing meshing transmission between the reverse gear output gear 8 and one gear portion of the dual gear, the number of teeth of the gear portion can be separately designed, thereby obtaining an optimal reversing transmission speed ratio.

It should be noted that the above-mentioned "linkage" can be understood as the association movement of a plurality of components (for example, two). Taking the linkage of two components as an example, when one of the components moves, the other component also moves.

For example, in some embodiments of the present disclosure, the linkage of the gear and the shaft may be understood as the fact that when the gear rotates, the shaft linked therewith also rotates, or, when the shaft rotates, the gear linked therewith also rotates..

For another example, the linkage of the shaft and the shaft can be understood as the fact that when one shaft rotates, the other shaft linked therewith also rotates.

For another example, the linkage of the gear and the gear can be understood as the fact that, when one gear rotates, the other gear linked therewith also rotates.

In the following description of "linkage" in the present disclosure, this understanding should be made unless otherwise specified.

As shown in FIG. 1 to FIG. 8, the reverse gear output gear 8 is idly mounted on the output shaft, therefore, if the reverse gear power transmitted to the reverse gear output gear 8 is output from the output shaft on which the reverse gear output gear 8 is idly mounted, a reverse gear synchronizer (e.g., a sixth-gear synchronizer 6c) needs to be arranged to synchronize the reverse gear output gear 8 with the corresponding output shaft. In some embodiments of the present disclosure, the reverse gear output gear 8 and one gear driven gear (e.g., a sixth-gear driven gear 6b) adjacent thereto share a gear synchronizer (e.g., a sixth-gear synchronizer 6c). In other words, for the gear driven gear arranged on the same output shaft together with the reverse gear output gear 8, the gear driven gear is also idly mounted on the output shaft and a gear synchronizer is needed to synchronize the gear driven gear with the output shaft to output power, so that the reverse gear output gear 8 can be arranged adjacent to the gear driven gear, thereby sharing the gear synchronizer with the gear driven gear; in this way, an engagement sheath of the shared gear synchronizer can engage with the reverse gear output gear 8 or the corresponding gear driven gear when moving left or right along the output shaft.

Hence, the number of synchronizers and the number of shifting yoke mechanisms can be reduced, so that the axial and radial dimensions of the power drive system 100 are relatively smaller, the structure is more compact, the control is more convenient, and the cost is reduced.

Of course, it can be understood that the reverse gear synchronizer in the embodiment of the present disclosure may also be a separate synchronizer independent of other gear synchronizers.

A specific embodiment of the gear synchronizer constituting the reverse gear synchronizer will be described in detail below with reference to the accompanying drawings and will not be described in detail herein.

The motor power shaft 3 will be described in detail below. As shown in FIG. 2 to FIG. 8, a motor-power-shaft first gear 31 and a motor-power-shaft second gear 32 are idly mounted on the motor power shaft 3. The motor-power-shaft first gear 31 can be in meshing transmission with a final drive driven gear 74.

The motor-power-shaft second gear 32 is arranged to be linked with one gear driven gear. When the vehicle having the power drive system 100 according to the embodiment of the present disclosure is in certain operating conditions (the specific operating conditions will be described below in combination with specific embodiments), the power output from the power source can be transmitted between the motor-power-shaft second gear 32 and the gear driven gear linked therewith, and the motor-power-shaft second gear 32 is linked with the gear driven gear at the moment.

For example, in some embodiments, the motor-power-shaft second gear 32 can be linked with a first-gear driven gear 1b, a second-gear driven gear 2b, a third-gear driven gear 3b, or a fourth-gear driven gear 4b, respectively. Taking FIG. 2 to FIG. 5 as examples, the motor-power-shaft second gear 32 and the second-gear driven gear 2b may be directly meshed or indirectly transmitted through an intermediate transmission component, which will be described in detail below in combination with specific embodiments.

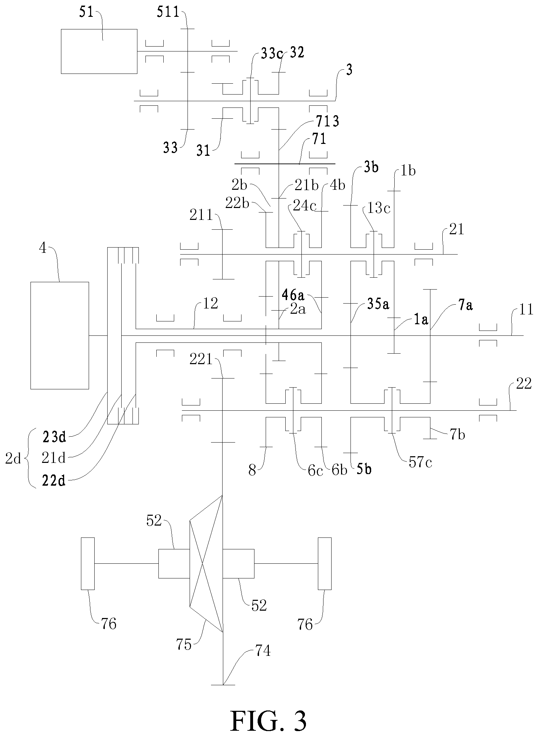

Further, a motor power shaft synchronizer 33c is further arranged on the motor power shaft 3, the motor power shaft synchronizer 33c is positioned between the motor-power-shaft first gear 31 and the motor-power-shaft second gear 32, and the motor power shaft synchronizer 33c can selectively engage with the motor-power-shaft first gear 31 or the motor-power-shaft second gear 32, so that the motor-power-shaft first gear 31 or the motor-power-shaft second gear 32 is linked with the motor power shaft 3. For example, in the example of FIG. 2, the engagement sheath of the motor power shaft synchronizer 33c moves left to engage with the motor-power-shaft second gear 32, and moves right to engage with the motor-power-shaft first gear 31. However, in the examples of FIG. 3 to FIG. 8, the engagement sheath of the motor power shaft synchronizer 33c moves left to engage with the motor-power-shaft first gear 31, and moves right to engage with the motor-power-shaft second gear 32.

Similarly, as shown in FIG. 2 to FIG. 8, the first motor generator 51 is arranged to be linked with the motor power shaft 3. For example, when the first motor generator 51 operates as a motor, the generated power can be output to the motor power shaft 3. For another example, when the first motor generator 51 operates as a generator, the power transmitted through the motor power shaft 3 can be output to the first motor generator 51 to drive the first motor generator 51 to generate electricity.

Here, it should be noted that in the description of the "motor generator" in the embodiments of the present disclosure, the motor generator can be understood as a motor having a generator function and a motor function unless otherwise specified.

As described above, the motor-power-shaft second gear 32 is adapted to be linked with one gear driven gear, and the first motor generator 51 can utilize at least part of power output from the engine 4 to generate electricity when the vehicle is running and parked, when the motor-power-shaft second gear 32 is linked with the gear driven gear.

In other words, when the vehicle is in a running state and the motor-power-shaft second gear 32 is linked with the gear driven gear, at least part of power of the engine 4 may be output to the first motor generator 51 through the gear driven gear, the motor-power-shaft second gear 32, and the motor power shaft 3, thereby driving the first motor generator 51 to generate electricity, and realizing the operation condition of charging while the engine 4 is driving.

When the vehicle is in a parking state (the vehicle is stopped but the engine 4 is still in operation, for example, the engine 4 idles) and the motor-power-shaft second gear 32 is linked with the gear driven gear, at least part of power of the engine 4 may be output through the gear driven gear, the motor-power-shaft second gear 32, and the motor power shaft 3 to the first motor generator 51, so as to drive the first motor generator 51 to generate electricity, and realize the parking charging function (i.e., "parking" charging), thereby greatly improving the charging efficiency and the fuel economy of the engine 4.

For the motor-power-shaft first gear 31, the motor-power-shaft first gear 31 is meshed with the final drive driven gear 74, so that the first motor generator 51 can engage with the motor-power-shaft first gear 31 through the motor power shaft synchronizer 33c to directly output the generated power from the motor-power-shaft first gear 31, thereby shortening the transmission chain, reducing the intermediate transmission components, and improving the transmission efficiency.

It should be noted that in the description of the present disclosure, the motor power shaft 3 may be the motor shaft of the first motor generator 51 itself. Of course, it can be understood that the motor shaft 3 and the motor shaft of the first motor generator 51 can also be two separate shafts.

Hence, the power driving system 100 according to the embodiment of the present disclosure can realize the charging function when the vehicle is running and parked, and the charging modes are enriched, so that the problems such as the single charging mode and low charging efficiency of the existing power transmission system are solved at least to some extent. In short, the power drive system 100 according to the embodiment of the present disclosure is capable of achieving two charging modes, namely, the running charging mode and the parking charging mode. Moreover, the power drive system 100 according to the embodiment of the present disclosure has seven forward gears, which can transmit power more smoothly, and realize high transmission efficiency, and seven different transmission speed ratios can better satisfy the demands of the vehicle for power and torque under different road conditions.

The specific configuration of the power drive system 100 will be described in detail below in combination with the specific embodiments with reference to FIG. 1 to FIG. 8.

First, the transmission manner of the motor power shaft 3 and the gear driven gear will be described in detail in combination with the specific embodiments.

In some embodiments of the present disclosure, as shown in FIG. 2, the power drive system 100 further includes an intermediate shaft 71. A first intermediate shaft gear 711 and a second intermediate shaft gear 712 are fixedly arranged on the intermediate shaft 71, the first intermediate shaft gear 711 is meshed with one gear driven gear (for example, the second-gear driven gear 2b), and the second intermediate shaft gear 712 is meshed with the motor-power-shaft second gear 32. In short, in these embodiments, the motor-power-shaft second gear 32 is linked with the gear driven gear through the second intermediate shaft gear 712 and the first intermediate shaft gear 711.

In other embodiments, as shown in FIG. 3, only a third intermediate shaft gear 713 is fixedly arranged on the intermediate shaft 71, and the motor-power-shaft second gear 32 is in transmission with the gear driven gear (for example, the second-gear driven gear 2b) through the third intermediate shaft gear 713.

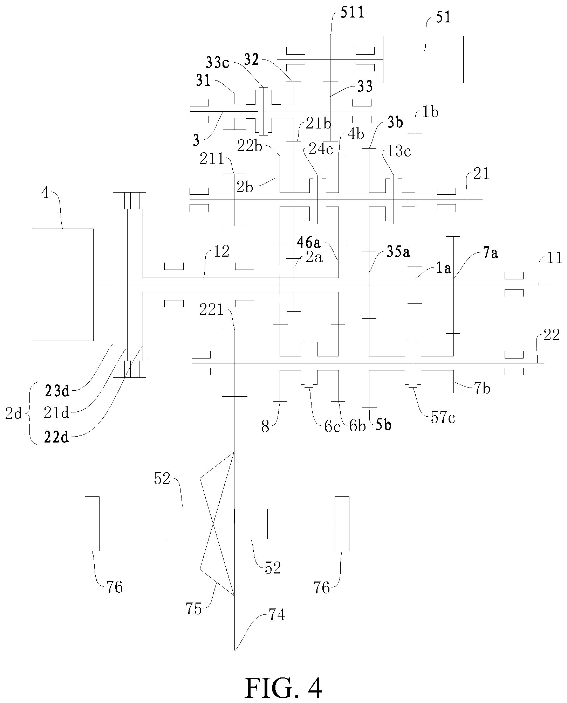

In still other embodiments, as shown in FIG. 4 to FIG. 5, the motor-power-shaft second gear 32 is in direct meshing transmission with the gear driven gear (e.g., the second-gear driven gear 2b).

Next, the transmission manner of the motor power shaft 3 and the first motor generator 51 will be described in detail in combination with the specific embodiments.

In some embodiments, as shown in FIG. 2 to FIG. 4, a motor-power-shaft third gear 33 is further arranged on the motor power shaft 3, and the first motor generator 51 is arranged to be in direct meshing transmission or indirect transmission with the motor-power-shaft third gear 33.

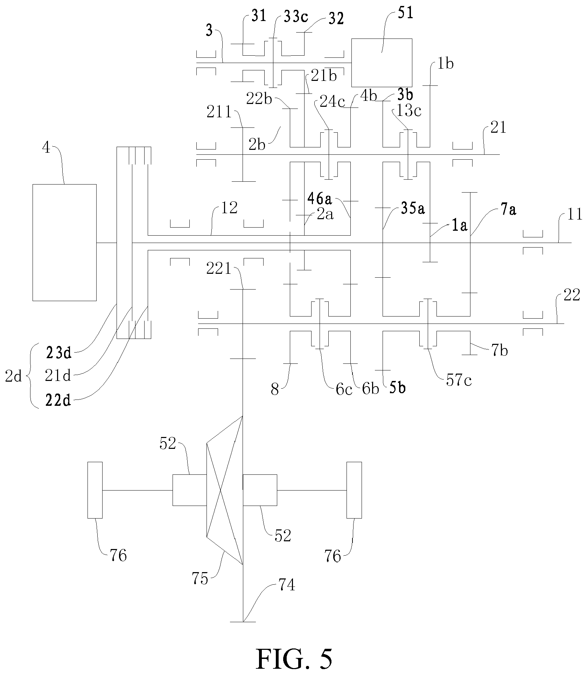

Further, as shown in FIG. 2, a first motor gear 511 is arranged on the motor shaft of the first motor generator 51, and the first motor gear 511 is in transmission with the motor-power-shaft third gear 33 through the intermediate gear 512. For another example, in the examples of FIG. 3 to FIG. 4, a first motor gear 511 is arranged on the motor shaft of the first motor generator 51, and the first motor gear 511 is directly meshed with the motor-power-shaft third gear 33. For another example, in the example of FIG. 5, the first motor generator 51 and the motor power shaft 3 may also be coaxially connected, in other words, the motor power shaft 3 is the motor shaft of the first motor generator 51.

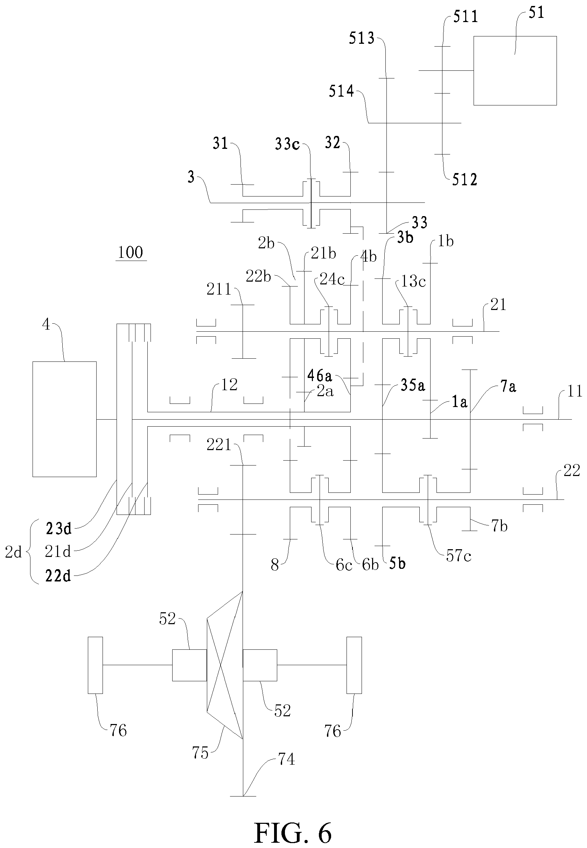

Of course, the present disclosure is not limited thereto. In the above embodiment, the motor-power-shaft second gear 32 is linked with one gear driven gear; and in other embodiments, for example, in the embodiments of FIG. 6 to FIG. 8, the motor-power-shaft second gear 32 may also be linked with one gear driving gear. For example, the motor-power-shaft second gear 32 may be linked with a fourth- and sixth-gear driving gear 46a or seventh-gear driving gear 7a, but it is not limited thereto.

In other words, the embodiments in FIG. 6 to FIG. 8 differ from the above embodiment in the different power connection objects of the first motor generator 51. That is, in the above embodiment, the first motor generator 51 is in power connection with the gear driven gear, and in the embodiments in FIG. 6 to FIG. 8, the first motor generator 51 is in power connection with the gear driving gear, such as a fourth- and sixth-gear driving gear 46a or a seventh-gear driving gear 7a. Thus, when power is transmitted between the engine 4 and the first motor generator 51, the transmission chain is relatively short, the transmission energy loss is less, and the transmission efficiency is higher.

It can be understood that the matching manner of the first motor generator 51 and the gear driving gear may be completely same as that of the first motor generator 51 and the gear driving gear in the above embodiment. In addition, the matching manner of the first motor generator 51 and the gear driving gear can be implemented in other similar manners.

For example, referring to FIG. 6, the first motor gear 511 is arranged on the motor shaft of the first motor generator 51, the first motor gear 511 is meshed with the intermediate gear 512, and the intermediate gear 512 and the intermediate gear 513 are coaxially fixed on the gear shaft 514, the intermediate gear 513 is meshed with the motor-power-shaft third gear 33, and the motor-power-shaft second gear 32 is meshed with the fourth- and sixth-gear driving gears 46a. Hence, the first motor generator 51 can obtain a better transmission speed ratio and improve the transmission efficiency.

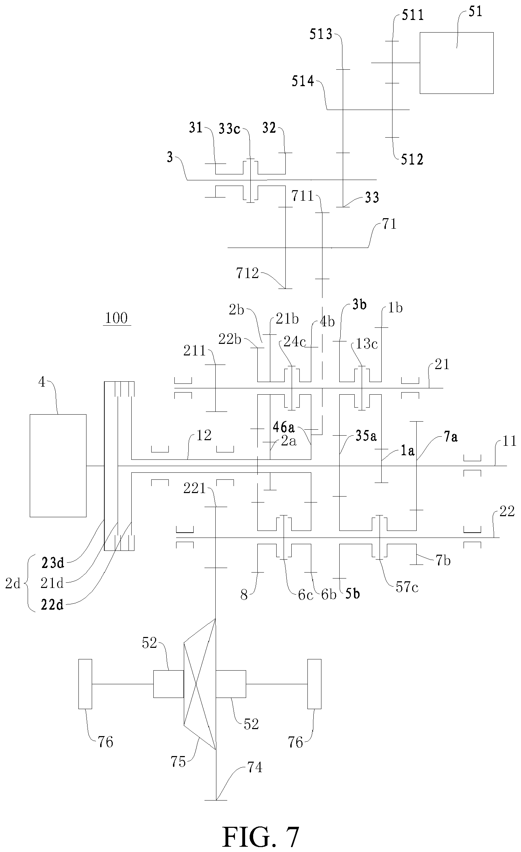

Referring to FIG. 7, the embodiment in FIG. 7 differs from the embodiment in FIG. 6 in that the intermediate shaft 71 is added, the first intermediate shaft gear 711 and the second intermediate shaft gear 712 are fixedly arranged on the intermediate shaft 71, the second intermediate shaft gear 712 is meshed with the motor-power-shaft second gear 32, and the first intermediate shaft gear 711 is meshed with the gear driving gear (such as the fourth- and sixth-gear driving gear 46a).

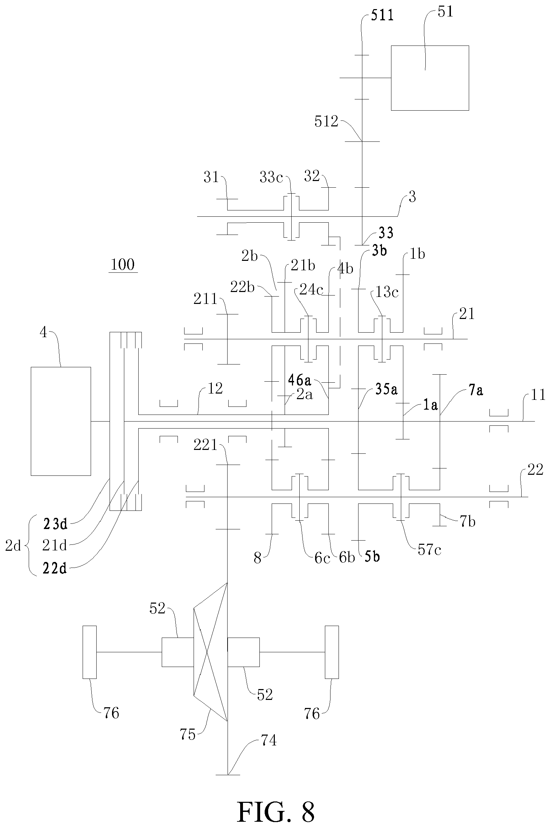

Referring to FIG. 8, the embodiment in FIG. 8 differs from the embodiment in FIG. 6 in that the first motor gear 511 is in power transmission with the motor-power-shaft third gear 33 only by the intermediate gear 512. Hence, the structure is more compact, the transmission chain is shorter, and the transmission efficiency is high. It can be understood that the motor-power-shaft first gear 31 of the embodiments in FIG. 6 to FIG. 8 is meshed with the final drive driven gear 74.

It should be understood that the changes of the above plurality of embodiments lie in different matching manners of the first motor generator 51 and the motor power shaft 3 and different matching manners of the motor power shaft 3 and the gear driving gear or the gear driven gear. For those skilled in the art, based on the above plurality of embodiments, it is apparent that the matching manners of the first motor generator 51 and the motor power shaft 3 and the matching manners of the motor power shaft 3 and the gear driving gear or the gear driven gear may be combined, and/or modified and/or changed in different embodiments. The novel embodiments formed by the combination and/or modification and/or change also fall within the scope of protection of the disclosure. Therefore, the descriptions thereof are omitted herein.

The input shafts, the output shafts, and the gear-position gear pairs are described in detail below in combination with the embodiments of FIG. 1 to FIG. 8.

In some embodiments of the present disclosure, as shown in FIG. 1 to FIG. 8, the number of the input shafts may be two, namely, the first input shaft 11 and the second input shaft 12. The second input shaft 12 may be a hollow shaft, and the first input shaft 11 may be a solid shaft; one part of the first input shaft 11 may be embedded in the hollow second input shaft 12, and the other part of the first input shaft 11 may extend axially outward from the second input shaft 12. The first input shaft 11 and the second input shaft 12 may be coaxially arranged.

The number of the output shafts may be two, namely, the first output shaft 21 and the second output shaft 22. The first output shaft 21 and the second output shaft 22 are arranged in parallel with the input shafts, and both the first output shaft 21 and the second output shaft 22 may be solid shafts.

The power drive system 100 according to the embodiments of the present disclosure may have seven forward gears, odd gear driving gears may be arranged on one input shaft such as the first input shaft 11, and even gear driving gears may be arranged on the other input shaft such as the second input shaft 12, so that the first input shaft 11 is responsible for the power transmission of the odd-gear gear pairs and the second input shaft 12 is responsible for the power transmission of the even-gear gear pair. In addition, in some embodiments of the present disclosure, in the plurality of gear driving gears, at least one of the gear driving gears is in meshing transmission with two gear driven gears respectively, namely, at least one of the gear driving gears is shared by two gear driven gears, thereby reducing the number of the gear driving gears, and reducing the axial dimension of the power drive system, and facilitating the arrangement.

As shown in FIG. 1, a first-gear driving gear 1a, a third- and fifth-gear driving gear 35a and a seventh-gear driving gear 7a may be arranged on the first input shaft 11, a second-gear driving gear 2a and a fourth- and sixth-gear driving gear 46a may be arranged on the second input shaft 12, and each gear driving gear rotates synchronously with the corresponding input shaft.

Correspondingly, as shown in FIG. 1, the first-gear driven gear 1b, the second-gear driven gear 2b, the third-gear driven gear 3b and the fourth-gear driven gear 4b are arranged on the first output shaft 21, the fifth-gear driven gear 5b, the sixth-gear driven gear 6b and the seventh-gear driven gear 7b are arranged on the second output shaft 22, and each gear driven gear is idly mounted on the corresponding output shaft, namely, each gear driven gear can differentially rotate relative to the corresponding output shaft.

The first-gear driven gear 1b is meshed with the first-gear driving gear 1a to constitute a first-gear gear pair, and the second-gear driven gear 2b is meshed with the second-gear driving gear 2a to constitute a second-gear gear pair; the third-gear driven gear 3b is meshed with the third- and fifth-gear driving gear 35a to constitute a third-gear gear pair, and the fourth driven gear 4b is meshed with the fourth- and sixth-gear driving gear 46a to constitute a fourth-gear gear pair; the fifth-gear driven gear 5b is meshed with the third- and fifth-gear driving gear 35a to constitute a fifth-gear gear pair, and the sixth-gear driven gear 6b is meshed with the fourth- and sixth-gear driving gear 46a to constitute a sixth-gear gear pair; and the seventh-gear driven gear 7b is meshed with the seventh-gear driving gear 7a to constitute a seventh-gear gear pair.

The fourth-gear gear pair and the sixth-gear gear pair share the fourth- and sixth-gear driving gear 46a, and the third-gear gear pair and the fifth-gear gear pair share the third- and fifth-gear driving gear 35a, thus reducing the two gear driving gears, so that the power drive system 100 is more compact in structure and smaller in axial dimension.

Since the driven gear is idly mounted on the output shaft, therefore, the synchronizer needs to be arranged to synchronize the driven gear with the corresponding output shaft to realize the power output.

In some embodiments, as shown in FIG. 1, the power drive system 100 includes a first- and third-gear synchronizer 13c, a second-fourth-gear synchronizer 24c, a fifth- and seventh-gear synchronizer 57c, and a sixth-gear synchronizer 6c.

As shown in FIG. 1, the first- and third-gear synchronizer 13c is arranged on the first output shaft 21 and positioned between the first-gear driven gear 1b and the third-gear driven gear 3b, and the first- and third-gear synchronizer 13c can engage the first-gear driven gear 1b or the third-gear driven gear 3b with the first output shaft 21, so that the driven gear and the first output shaft 21 can rotate synchronously.

For example, as shown in FIG. 1, when moving left, the engagement sheath of the first- and third-gear synchronizer 13c can engage the third-gear driven gear 3b with the first output shaft 21, so that the third-gear driven gear 3b and the first output shaft 21 can rotate synchronously. When moving right, the engagement sheath of the first- and third-gear synchronizer 13c can engage the first-gear driven gear 1b with the first output shaft 21, so that the first-gear driven gear 1b and the first output shaft 21 can rotate synchronously.

As shown in FIG. 1, similarly, the second-fourth-gear synchronizer 24c is arranged on the first output shaft 21 and positioned between the second-gear driven gear 2b and the fourth-gear driven gear 4b, and the second-fourth-gear synchronizer 24c can engage the second-gear driven gear 2b or the fourth-gear driven gear 4b with the first output shaft 21, so that the driven gear and the first output shaft 21 can rotate synchronously.

For example, as shown in FIG. 1, when moving left, the engagement sheath of the second-fourth-gear synchronizer 24c can engage the second-gear driven gear 2b with the first output shaft 21, so that the second-gear driven gear 2b and the first output shaft 21 rotate synchronously. When moving right, the engagement sheath of the second-fourth-gear synchronizer 24c can engage the fourth-gear driven gear 4b with the first output shaft 21, so that the fourth-gear driven gear 4b and the first output shaft 21 rotate synchronously.

As shown in FIG. 1, similarly, the fifth- and seventh-gear synchronizer 57c is arranged on the second output shaft 22, and the fifth- and seventh-gear synchronizer 57c is positioned between the fifth-gear driven gear 5b and the seventh-gear driven gear 7b. The fifth- and seventh-gear synchronizer 57c is used for engaging the fifth-gear driven gear 5b or the seventh-gear driven gear 7b with the second output shaft 22. For example, when moving right, the engagement sheath of the fifth- and seventh-gear synchronizer 57c can engage the seventh-gear driven gear 7b with the second output shaft 22, so that the seventh-gear driven gear 7b and the second output shaft 22 rotate synchronously. For another example, when moving left, the engagement sheath of the fifth- and seventh-gear synchronizer 57c can engage the fifth-gear driven gear 5b with the second output shaft 22, so that the fifth-gear driven gear 5b and the second output shaft 22 rotate synchronously.

As shown in FIG. 1, similarly, the sixth-gear synchronizer 6c is arranged on the second output shaft 22, and the sixth-gear synchronizer 6c is positioned at one side, for example, the left side, of the sixth-gear driven gear 6b, and the sixth-gear synchronizer 6c is used for engaging the sixth-gear driven gear 6b with the second output shaft 22. For example, when moving right, the engagement sheath of the sixth-gear synchronizer 6c can engage the sixth-gear driven gear 6b with the second output shaft 22, so that the sixth-gear driven gear 6b and the second output shaft 22 rotate synchronously.

As shown in FIG. 1, the reverse gear output gear 8 is arranged adjacent to the sixth-gear driven gear 6b to share the sixth-gear synchronizer 6c with the sixth-gear driven gear 6b, so that the sixth-gear synchronizer 6c constitutes a reverse gear synchronizer. As shown in FIG. 1 to FIG. 8, when moving left, the engagement sheath of the sixth-gear synchronizer 6c can engage the reverse gear output gear 8 with the second output shaft 22, and when moving right, the engagement sheath of the sixth-gear synchronizer 6c can engage the sixth-gear driven gear 6b with the second output shaft 22. In some embodiments of the present disclosure, the reverse gear output gear 8 is positioned at one side, close to the engine 4, of the sixth-gear driven gear 6b.

In some embodiments, as shown in FIG. 1, the distance between the second-gear driving gear 2a and the engine 4, the distance between the fourth- and sixth-gear driving gear 46a and the engine 4, the distance between the third- and fifth-gear driving gear 35a and the engine 4, the distance between the first-gear driving gear 1a and the engine 4, and the distance between the seventh-gear driving gear 7a and the engine 4 increase progressively. As a result, the gear position arrangement is more reasonable, and the power drive system 100 is more compact, and relatively smaller in radial and axial dimensions.

In some embodiments of the present disclosure, the power transmission or separation between the engine 4 and the first input shaft 11 and the second input shaft 12 can be carried out by a dual clutch 2d.

Referring to FIG. 1 to FIG. 8, the dual clutch 2d is provided with an input end 23d, a first output end 21d and a second output end 22d, and the engine 4 is connected with the input end 23d of the dual clutch 2d. For example, the engine 4 may be connected with the input end 23d of the dual clutch 2d by various forms such as a flywheel, a damper or a torsion disk.

The first output end 21d of the dual clutch 2d is connected with the first input shaft 11 so that the first output end 21d and the first input shaft 11 rotate synchronously. The second output end 22d of the dual clutch 2d is connected with the second input shaft 12 so that the second output end 22d and the second input shaft 12 rotate synchronously.

The input end 23d of the dual clutch 2d may be a housing of the dual clutch 2d, and the first output end 21d and the second output end 22d may be two driven discs. Generally, the housing and the two driven disks may be disconnected, that is, the input end 23d is disconnected from both the first output end 21d and the second output end 22d. When the input end 23d needs to engage with one of the driven discs, the housing can be controlled to engage with the corresponding driven disc to synchronously rotate, that is, the input end 23d engages with one of the first output end 21d and the second output end 22d, so that the power transmitted from the input end 23d can be output through one of the first output end 21d and the second output end 22d.

In some embodiments of the present disclosure, the housing may also engage with the two driven disks at the same time, that is, the input end 23d may also engage with the first output end 21d and the second output end 22d at the same time, so that the power transmitted from the input end 23d can be simultaneously output through the first output end 21d and the second output end 22d.

It should be understood that the specific engagement state of the dual clutch 2d is affected by the control strategy. For those skilled in the art, the control strategy can be adaptively set according to the actually required transmission mode, so that various modes that the input end 23d is disconnected from the two output ends and the input end 23d engages with at least one of the two output ends can be switched.

The connection relationship between the three power output shafts (i.e., the first output shaft 21, the second output shaft 22, and the motor power shaft 3) and a vehicle differential 75 will be described in detail below with reference to FIG. 1 to FIG. 8.

The differential 75 of the vehicle may be arranged between a pair of front wheels 76 or between a pair of rear wheels. In some examples of the present disclosure, the differential 75 is positioned between a pair of front wheels 76. The function of the differential 75 is to allow the left and right driving wheels to roll at different angular velocities when the vehicle is turning or running on an uneven road surface to ensure the pure rolling motion between the left and right driving wheels and the ground. The final drive driven gear 74 is arranged on the differential 75, for example, the final drive driven gear 74 may be arranged on the housing of the differential 75. The final drive driven gear 74 may be a bevel gear, but is not limited thereto.

Further, a first-output-shaft output gear 211 is fixedly arranged on the first output shaft 21, the first-output-shaft output gear 211 rotates synchronously with the first output shaft 21, and the first-output-shaft output gear 211 is in meshing transmission with the final drive driven gear 74, so that the power transmitted through the first output shaft 21 can be transmitted from the first-output-shaft output gear 211 to the final drive driven gear 74 and the differential 75.

Similarly, the second-output-shaft output gear 221 is fixedly arranged on the second output shaft 22, the second-output-shaft output gear 221 synchronously rotates with the second output shaft 22, and the second-output-shaft output gear 221 is in meshing transmission with the final drive driven gear 74, so that the power transmitted through the second output shaft 22 can be transmitted from the second-output-shaft output gear 221 to the final drive driven gear 74 and the differential 75.

Similarly, the motor-power-shaft first gear 31 can be used for outputting the power transmitted through the motor power shaft 3, so that the motor-power-shaft first gear 31 is also in meshing transmission with the final drive driven gear 74.

Some typical operating conditions of the power drive system 100 according to the embodiments of the present disclosure include parking electricity generation, a charging-while-driving mode in the case of simultaneous engagement of the dual clutch 2d, and a reverse gear mode.

First, the typical operating condition of parking electricity generation will be described. When the vehicle is in a parking state, the engine 4 is arranged to output the generated power to the gear driven gear which is linked with the motor-power-shaft second gear 32, and the motor-power-shaft second gear 32 and the motor power shaft 3 are synchronized by the motor power shaft synchronizer 33c so that the power is output to the first motor generator 51 to drive the first motor generator 51 to generate electricity.

In combination with the embodiment shown in FIG. 1, the engine 4 can output power through the dual clutch 2d to the second input shaft 12 after the vehicle is parked, and the motor power shaft synchronizer 33c engages with the motor-power-shaft second gear 32 so that the motor-power-shaft second gear 32 is synchronized with the motor power shaft 3, and thus the power transmitted through the second input shaft 12 can be output to the first motor generator 51 through the second-gear gear pair, the first intermediate shaft gear 711, the intermediate shaft 71, the second intermediate shaft gear 712, the motor-power-shaft second gear 32, the motor power shaft synchronizer 33c, the motor power shaft 3, the motor-power-shaft third gear 33, the intermediate gear 512, and the first motor gear 511, so as to drive the first motor generator 51 as a generator to generate electricity.

Hence, the parking electricity generation function is realized, the charging modes are enriched; and the vehicle is in a stationary state under the parking electricity generation condition, and the power of the engine 4 can be all used for charging, thereby improving the charging efficiency, and realizing the rapid power supply function.

Next, the charging-while-driving operating condition that the input end 23d of the dual clutch 2d simultaneously engages with the first output end 21d and the second output end 22d will be described. Under this operating condition, since the input end 23d of the dual clutch 2d simultaneously engages with the first output end 21d and the second output end 22d, the engine 4 can output one part of power to the wheels through one output shaft to be used as the power for running the vehicle, and can output the other part of power to the first motor generator 51 through the motor-power-shaft second gear 32 to drive the first motor generator 51 to generate electricity.

In combination with the embodiment shown in FIG. 3, under the operating condition, the motor power shaft synchronizer 33c engages with the motor-power-shaft second gear 32, and one part of the power of the engine 4 can be output to the first input shaft 11, and then output through the first-gear gear pair, the third-gear gear pair, the fifth-gear gear pair or the seven-gear gear pair; the other part of power of the engine 4 can be output to the first motor generator 51 through the second input shaft 12, the second-gear gear pair, and the motor-power-shaft second gear 32, so as to drive the first motor generator 51 to generate electricity.

In the conventional power transmission system having the dual clutch 2d, only one clutch of the dual clutch 2d is in an operation state each time, the power drive system 100 according to the embodiment of the present disclosure achieves breakthrough application of the dual clutch 2d, that is, in the case where both clutches of the dual clutch 2d are in an engaged state (i.e., the input end 23d simultaneously engages with the first output end 21d and the second output end 22d), one part of power of the engine 4 is output by one output shaft (for example, the first output shaft 21 or the second output shaft 22) to drive the vehicle to run, and the other part of power is output to the first motor generator 51 to drive the first motor generator 51 to generate electricity, thereby enriching the transmission mode, and taking into account the vehicle running and charging requirements.

Then, the reverse gear mode is described. The power drive system 100 according to the embodiments of the present disclosure has three reverse gear modes of a mechanical reverse gear mode, an electric reverse gear mode, and a hybrid reverse gear mode.

The mechanical reverse gear mode utilizes the power of the engine 4 to achieve the reverse gear function of the vehicle. When the vehicle is in the mechanical reverse gear mode, the engine 4 as a power source outputs power generated to the reverse gear output gear 8 through the second-gear driving gear 2a and the second-gear driven gear 2b (dual gear).

For example, in combination with the embodiment illustrated in FIG. 1, the sixth-gear synchronizer 6c engages with the reverse gear output gear 8 to synchronize the reverse gear output gear 8 with the second output shaft 22, and the power generated by the engine 4 is output to the reverse gear output gear 8 through the second input shaft 12, the second-gear driving gear 2a and the second-gear driven gear 2b (dual gear). Due to the engagement function of the reverse gear synchronizer 6c, the reverse gear output gear 8 is linked with the second output shaft 22, so that the reverse gear power can be finally output from the second output shaft 22.

In short, when the vehicle is in the mechanical reverse gear mode, as shown in FIG. 2, only the reverse gear synchronizer 6c engages with the reverse gear output gear 8. In this case, the transmission chain is relatively short, the intermediate transmission components are relatively few, and the reversing efficiency is high,

The electric reverse gear mode utilizes the first motor generator 51 to realize the reversing function of the vehicle. When the vehicle is in the electric reverse gear mode, the first motor generator 51 serves as a power source and the motor power shaft synchronizer 33c engages with the motor-power-shaft first gear 31 to synchronize the motor-power-shaft first gear 31 with the motor power shaft 3, so that the power generated by the first motor generator 51 is output from the motor-power-shaft first gear 31 to achieve reversing.

In combination with the embodiment of FIG. 2, the motor power shaft synchronizer 33c engages with the motor-power-shaft first gear 31, the power output from the first motor generator 51 is output to the motor-power-shaft first gear 31 through the first motor gear 511, the intermediate gear 512, the motor-power-shaft third gear 33, the motor power shaft 3 and the motor power shaft synchronizer 33c, and further output by the motor-power-shaft first gear 31.

In this case, the transmission chain is relatively short, the intermediate transmission components are relatively few, and the reversing efficiency is high. It can be considered as the direct reversing path of the first motor generator 51.

In short, in the electric reverse gear mode, only the motor power shaft synchronizer 33c engages with the motor-power-shaft first gear 31.

The hybrid reverse gear mode simultaneously utilizes the engine 4 and the first motor generator 51 to realize the reversing function of the vehicle. The hybrid reverse gear mode is a combination of the above mechanical reverse gear mode and the electric reverse gear mode.

When the vehicle is in the hybrid reverse gear mode, the engine 4 serves as a power source and outputs the generated power to the second-gear driven gear 2b (dual gear), and the reverse gear synchronizer synchronizes the reverse gear output gear 8 with the second output shaft 22, so that the power generated by the engine 4 is output from the second output shaft 22.

At the same time, the first motor generator 51 also serves as a power source and the motor power shaft synchronizer 33c synchronizes the motor-power-shaft first gear 31 with the motor power shaft 3, so that the power generated by the first motor generator 51 is output from the motor-power-shaft first gear 31.

As shown in FIG. 2, when the power drive system 100 is in the hybrid reverse gear mode, in combination with the above-described mechanical reverse gear mode and the electric reverse gear mode, the engine 4 outputs the reversing power from the second output shaft 22 according to the above-described mechanical reverse gear mode, the first motor generator 51 outputs the reversing power from the motor-power-shaft first gear 31 according to the electric reverse gear mode, and the two parts of power are coupled at the final drive driven gear 74 and then output to the wheels together to realize the hybrid reversing.

At this time, the first motor generator 51 can perform speed adjustment so that the final drive driven gear 74 can synchronously receive the power from the engine 4 and the first motor generator 51 in balance, thereby improving the smoothness and coordination of transmission.

In short, in the hybrid mode, as shown in FIG. 2, the motor power shaft synchronizer 33c engages with the motor-power-shaft first gear 31 and the reverse gear synchronizer 6c engages with the reverse gear output gear 8.

Hence, the power drive system 100 according to the embodiment of the present disclosure can realize three reverse gear modes, namely, the mechanical reverse gear mode, the electric reverse gear mode, and the hybrid reverse gear mode, which enrich the reversing operating conditions. The three reverse gear modes can be flexibly switched according to the actual conditions to meet the driving requirements.

For example, in the case where the vehicle's battery charge is sufficient, the electric reverse gear mode can be used, so that no harmful gas is emitted, and the energy consumption can be reduced when reversing. Especially for the novice driver who carries out reverse parking, it may take several operations to back the vehicle into the designated position, but the engine 4 will generate more harmful gas when reversing at low speed, meanwhile, the engine 4 generally works in non-economic speed area when reversing, and the fuel consumption is relatively high. Therefore, the electric reverse gear mode is used to improve the problem well, the emission is reduced, and by using the motor as the power, low speed reversing with low energy consumption is achieved, so that the fuel economy of the engine 4 is improved to a certain extent.

For another example, in the case where the vehicle's battery charge is insufficient or relatively low, the mechanical reverse gear can be used. For another example, under the operating condition of a need for quick reversing or a need for high horsepower reversing and the like, the hybrid reverse gear mode can be used to increase the power performance of the vehicle and facilitate reversing.

Of course, the above description of the three reverse gear mode application environments is merely illustrative and is not to be construed as limiting or suggesting to the present disclosure that the corresponding reverse gear mode must be employed when the vehicle is in the above environment. It will be apparent to those skilled in the art that the reverse gear mode required in the corresponding reversing environment can be specifically set according to needs or actual conditions.

Hence, the reverse gear modes of the power drive system 100 are further enriched, thereby giving the driver more choices, fully improving the driving pleasure, and better meeting the reversing requirements of different road conditions.

The power drive system 100 according to some embodiments of the present disclosure, as shown in FIG. 1 to FIG. 8, may also be additionally provided with a second motor generator 52 to increase the power performance of the power drive system 100 to enrich the transmission modes.

For example, in some embodiments, the second motor generator 52 can be in transmission with the final drive driven gear 74. For example, a gear can be arranged on the motor shaft of the second motor generator 52, and the gear is in direct meshing transmission with the final drive driven gear 74. For another example, in other embodiments, the second motor generator 52 may also be arranged to be connected with the first input shaft 11 or the first output shaft 21. For another example, in some more embodiments, the number of the second motor generators 52 is two and the second motor generators 52 are respectively arranged at both sides of the differential 75, and the two second motor generators 52 can be integrated with the differential 75 into a whole. In some embodiments of the present invention, the above engine 4 and the first motor generator 51 are used for driving the front wheels, the second motor generators 52 may be wheel motors and used for driving the rear wheels, or the second motor generators 52 may drive the two rear wheels through a retarding mechanism, or the number of the second motor generators 52 is two and each of the second motor generators 52 drives one rear wheel by a retarding mechanism.

FIG. 1 illustrates a basic embodiment of the power drive system 100 according to the embodiment of the present disclosure. The embodiments in FIG. 2 to FIG. 5 are modifications of the embodiment in FIG. 1, and the difference lies in the addition of the first motor generator 51 as compared to the embodiment in FIG. 1. The four embodiments in FIG. 2 to FIG. 5 differ from each other in different power connection modes between the first motor generator 51 and the second-gear driven gear 2b.

In addition, in each of the embodiments in FIG. 2 to FIG. 5, the first motor generator 51 is in power connection with the second-gear driven gear 2b. However, it should be noted that the first motor generator 51 may also be in power connection with the first-gear driven gear 1b, the third-gear driven gear 3b or the fourth-gear driven gear 4b (the specific examples are not shown). The embodiments in FIG. 6 to FIG. 8 differ from the embodiments in FIG. 2 to FIG. 5 in different power connection objects of the first motor generator 51, which have been described in detail above. For the typical operating conditions, the embodiments in FIG. 6 to FIG. 8 have the same or similar transmission mode and transmission principle as those of the embodiments in FIG. 2 to FIG. 5, and therefore will not be further described herein.
Moreover, the embodiment of the present disclosure further provides a vehicle including the power drive system 100 as described above. It should be noted that other components of the vehicle according this embodiment of the present disclosure such as a driving system, a steering system, and a braking system are all existing technologies well known to a person of ordinary skill in the art, and therefore detailed descriptions of such known structures are omitted herein.

In the descriptions of this specification, descriptions of reference terms "one embodiment", "some embodiments," "an example," "a specific example", or "some examples" are intended to indicate that particular features, structures, materials, or characteristics described with reference to the embodiment or example are included in at least one embodiment or example of the present disclosure. In this specification, schematic descriptions of the foregoing terms do not need to aim at a same embodiment or example. Besides, the specific features, the structures, the materials or the characteristics that are described may be combined in a proper manner in any one or more embodiments or examples. Furthermore, different embodiments or examples described in this specification can be joined and combined by those skilled in the art.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A power drive system, comprising:
an engine;
a plurality of input shafts, the engine being arranged to selectively engage with at least one of the plurality of input shafts, and a plurality of gear shifting gears being arranged on each of the input shafts;
a plurality of output shafts, a plurality of gear driven gears being arranged on each of the output shafts, the plurality of gear driven gears being correspondingly meshed with the plurality of gear driving gears, a reverse gear output gear being idly mounted on one of the plurality of output shafts and a reverse gear synchronizer for engaging with the reverse gear output gear being further arranged the output shaft, a gear portion being arranged at one side of one of the plurality of gear driven gears to form a dual gear, and the reverse gear output gear being meshed with the gear portion;
a motor power shaft, a motor-power-shaft first gear and a motor-power-shaft second gear being idly mounted on the motor power shaft, and a motor power shaft synchronizer positioned between the motor-power-shaft first gear and the motor-power-shaft second gear being further arranged on the motor power shaft, wherein the motor-power-shaft second gear is arranged to be linked with one of the plurality of gear driving gears; and
a first motor generator, the first motor generator being arranged to be linked with the motor power shaft.

2. The power drive system according to claim 1, wherein
the plurality of input shafts comprises a first input shaft and a second input shaft, and the second input shaft is sleeved over the first input shaft;
the plurality of output shafts comprises a first output shaft and a second output shaft;
a first-gear driving gear, a third- and fifth-gear driving gear and a seventh-gear driving gear are fixedly arranged on the first input shaft, and a second-gear driving gear and a fourth- and sixth-gear driving gear are fixedly arranged on the second input shaft;
a first-gear driven gear, a second-gear driven gear, a third-gear driven gear and a fourth-gear driven gear are idly mounted on the first output shaft, and a fifth-gear driven gear, a sixth-gear driven gear and a seventh-gear driven gear are idly mounted on the second output shaft;
a first- and third-gear synchronizer is arranged between the first-gear driven gear and the third-gear driven gear, a second-fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged at one side of the sixth-gear driven gear.

3. The power drive system according to claim 2, wherein the reverse gear output gear is mounted arranged on the second output shaft and adjacent to the sixth-gear driven gear, and the reverse gear output gear and the sixth-gear driven gear share the sixth-gear synchronizer so that the sixth-gear synchronizer constitutes a reverse gear synchronizer.

4. The power drive system according to claim 2, wherein a first-output-shaft output gear is fixedly arranged on the first output shaft, a second-output-shaft output gear is fixedly arranged on the second output shaft, and the first-output-shaft output gear, the second-output-shaft output gear and the motor-power-shaft first gear are all meshed with a final drive driven gear of the vehicle.

5. The power drive system according to claim 2, further comprising a dual clutch, wherein the dual clutch has an input end, a first output end, and a second output end, the engine is connected with the input end, the first output end is connected with the first input shaft, and the second output end is connected with the second input shaft.

6. The power drive system according to claim 2, wherein the gear portion is arranged at one side of the second-gear driven gear to constitute the dual gear.

7. The power drive system according to claim 1, wherein the reverse gear output gear and one gear driven gear adjacent to the reverse gear output gear in the plurality of gear driven gears share a gear synchronizer, and the shared gear synchronizer constitutes the reverse gear synchronizer.

8. The power drive system according to claim 2, wherein the motor-power-shaft second gear is linked with the fourth-sixth driving gear or the seventh-gear driving gear.

9. The power drive system according to claim 2, wherein the distance between the second-gear driving gear and the engine, the distance between the fourth- and sixth-gear driving gear and the engine, the distance between the third- and fifth-gear driving gear and the engine, the distance between the first-gear driving gear and the engine, and the distance between the seventh-gear driving gear and the engine increase progressively.

10. A vehicle, comprising the power drive system according to any one of claims 1 to 9.
